# EUROPEAN PATENT APPLICATION

(11) **EP 4 311 432 A1**
(43) Date of publication of application: **31.01.2024**
(21) Application number: 23187216.9
(22) Date of filing: 24.07.2023
(51) Int. Cl.: A01N 1/02, G01D 11/24, G01D 21/02, G01D 9/00

(54) **ELECTRONIC MODULE FOR CONTAINERS AND CONTAINER**

(30) Priority: 28.07.2022 ES 202230691
(71) Applicant: General Courier Vallès, SL, 08403 Granollers (ES)
(72) Inventor: SÁNCHEZ GIRONELL, Marcel, 08403 GRANOLLERS (ES); SÁNCHEZ FERNÁNDEZ, Ariadna, 08403 GRANOLLERS (ES)
(74) Representative: Torner, Juncosa I Associats, SL

(57) **Abstract**

An electronic module for containers and a container are provided. The electronic module is adapted for its attachment to a container and comprises: a first temperature sensor and a first presence sensor configured, when the electronic module is attached to the container, to respectively detect temperature and content data within the container; an electromechanical device for the opening/closing of the container; a communications module; a display unit comprising a screen, wherein the display unit is arranged such that it is visible from the outside of the container; a central processing unit operatively connected to the first temperature sensor, the first presence sensor, the electromechanical device, the communications module and the display unit; and a power source for powering, at least, a central processing unit.

## Description

### Field of the Art

This invention refers to an electronic module attachable to a container. The invention further refers to a container including said electronic module. In particular, according to this invention, the container is a transport container, for example, for biological samples, vaccines, medicines, etc.

### State of the Art

Containers for the storage and/or transport of samples/objects require light and compact reliable electronic modules which enable monitoring and provide real-time information of the stored and/or transported samples/objects.

Generally, the electronic modules are inefficient, as they do not contain all the necessary components to allow for the monitoring and provision of information. Likewise, the current electronic modules cannot be easily and securely attached to the containers to carry out the above functions.

### Description of the Invention

Therefore, an object of the present invention is to provide a compact and reliable electronic module, which can be attached to a container to control, in real-time, the access, storage, and/or transport of the samples placed in the container.

To that end, according to a first aspect, the present invention provides an electronic module for containers.

In some exemplary embodiments, the proposed electronic module comprises: a (first) temperature sensor and a (first) presence sensor, configured, when the electronic module is attached to the container, to respectively detect temperature and content data within the container; an electromechanical device for the opening/closing of the container; a communications module; a display unit comprising a screen, wherein the display unit is arranged such that, when the electronic module is attached to the container, it is visible from outside the container, a central processing unit operatively connected to the first temperature sensor, the first presence sensor, the electromechanical device, the communications module and the display unit; and a power source for powering, at least, a central processing unit.

The present invention also provides, according to a second aspect, a container comprising the electronic module of the first aspect of the invention. In a particular exemplary embodiment, the container is a transport container for biological samples, vaccines, medicines, etc.

Preferably, in some exemplary embodiments, the electronic module also comprises a casing for housing, at least, the previously mentioned sensors, devices and modules.

In some exemplary embodiments, the casing comprises: a first opening for enabling the communication/interaction of the temperature sensor and of the presence sensor with the inside of the container; a second opening for the opening/closing electromechanical device; a third opening for the communications module; a fourth removable opening for the arrangement of the power source; and a fifth opening, opposite the first opening, for the communication/interaction of the display unit with the outside of the container.

In an exemplary embodiment, the third opening is on a plane different from the plane of the first opening. Alternatively or complementarily, the second opening comprises two perpendicular sides of the casing. Likewise, the first opening may comprise two sub-portions: a first one for the temperature sensor and a second one for the presence sensor.

In some exemplary embodiments, the display unit also comprises one or more light-emitting diodes (LEDs), in particular of different colours.

In some exemplary embodiments, the proposed electronic module also comprises a radiofrequency identification means reading unit. The radiofrequency identification means may be implemented through cards employing, for example, RFID or NFC technology, among others. The card or cards may be physical or be implemented by software and run by a computing device, for example, a smart mobile phone. In other exemplary embodiments, the radiofrequency identification means may operate by means of Bluetooth technology, or another wireless technology, and be implemented by means of software run on a smart mobile device.

In other embodiments, the electronic module, or the container, comprises biometric identification means/systems, such as touch or facial identification, associated with the electromechanical container opening/closing device. In this way the opening/closing of the container is performed by biometric authentication.

Alternatively, in other embodiments, the opening/closing of the container is performed by means of a QR code. For this purpose, the electronic module, or the container, comprises a camera or scanning means for acquiring/scanning said QR code.

In some exemplary embodiments, the power source comprises one or more batteries. The battery or batteries may be rechargeable.

In some exemplary embodiments, the module also comprises a second temperature sensor and a second presence sensor. Preferably, according to the present invention, these additional temperature and presence sensors are arranged in the casing through a sixth opening which allows, when the module is attached to the container, the communication of these with the inside of the container. In some examples, the sixth opening may comprise two sub-portions, the first one housing the second temperature sensor and the second one of the sub-portions housing the second presence sensor. Preferably, the sixth opening is located co-linearly with the first opening.

In some exemplary embodiments, the electronic module comprises an electronic board including or comprising the temperature sensor or sensors, the presence sensor or sensors, the communications module, the screen, the central processing unit, and the power source. The only component outside the electronic board is the opening/closing electromechanical device, since this is preferably located in the precise position needed according to the shape of the container and/or of the container lid. The opening/closing electromechanical device may be linked to the electronic board by means of a cable carrying both the blocking signal and the electromechanical device status (opened/closed).

In some exemplary embodiments, the electronic board is adapted or configured, for example, by means of a groove, to split/break up into at least two portions. Preferably, the first sub-portion or the main electronic board includes or comprises the communications module, the screen, the central processing unit, the power source, the LEDs, etc. On the other hand, the second sub-portion, or secondary electronic board, includes or comprises the temperature sensor or sensors, and the presence sensor or sensors. The secondary electronic board is configured to be connected to the main electronic board, for example, by means of a ribbon cable or a similar connection element.

In some exemplary embodiments, the electronic board may additionally comprise/include an accelerometer, and/or a buzzer. Therefore, the module allows to broadcast/transmit audible alerts.

In an exemplary embodiment, the communications module comprises a SIM, microSIM, nanoSIM, or nuSIM card, or even another radiotechnology. The communications module is configured to send, among others, the temperature and content data of the interior of the container, detected by the temperature and presence sensors, to a computing device or remote, local or cloud server.

In some examples, in particular, the third opening also houses a USB connector or another technology.

In an exemplary embodiment, the casing also comprises a hole for the emergency opening of the opening/closing electromechanical device.

In an exemplary embodiment, the presence detector is a proximity sensor, for example, a capacitive, inductive or photoelectric sensor, such as an infrared sensor, configured to detect the presence of the samples inside the container.

In some embodiments, the electronic module may include one or more barometric pressure sensors to detect whether the samples are undergoing decompression.

In some embodiments, the electronic module may include one or more acoustic emission sensors.

In some embodiments, the electronic module may include one or more light sensors to detect whether the samples are affected by light when the container is left opened.

Said screen may show information about the contents related to the samples, that is, if the container is full or empty, information related to the status of the power source, the temperature within the container, the type of sample stored/transported, etc.

The screen may have different sizes, and in some particular embodiments may be of electronic ink. In some embodiments, in addition to the above information, the screen may also display a label or barcode identifying the transport/shipment. That is, the screen is configured to simulate a shipping label for domestic or international shipments.

In some embodiments, the opening/closing electromechanical device includes a detection sensor, preferably arranged on the container lid, for the control, in cooperation of the presence sensors, of the opening and closing of the container during the whole chain of custody of the samples, and to avoid manipulation thereof during transport.

In some embodiments, the container is gas-powered, housing a cold system.

In some embodiments, the container is made of or comprises a water resistant material.

In some embodiments, the electronic module, or the interior of the container, may include one or more cameras to record whatever occurs to the samples during transport.

### Brief Description of the Drawings

The foregoing and other advantages and characteristics will be more clearly understood in the following detailed description of several illustrative and non-limiting embodiments with reference to the attached drawings, wherein:
Figs. 1A-1E schematically show different views of the proposed electronic module, according to an exemplary embodiment of the present invention.
Fig. 2 schematically illustrates the different elements included in the proposed electronic module, according to an exemplary embodiment of the present invention.

### Detailed Description of Several Embodiments

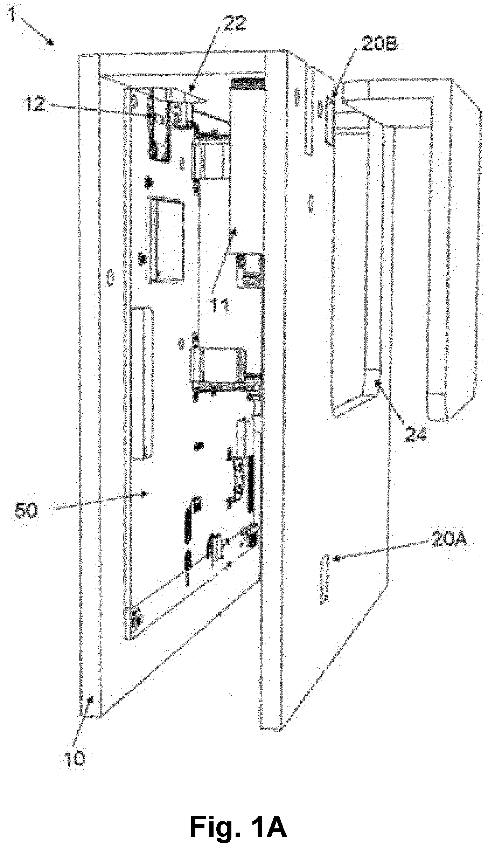

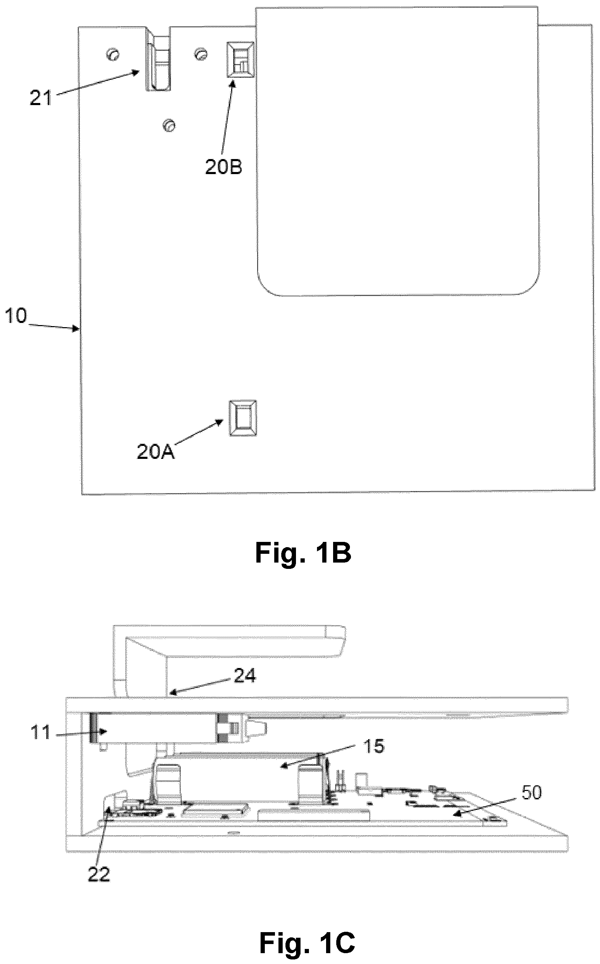

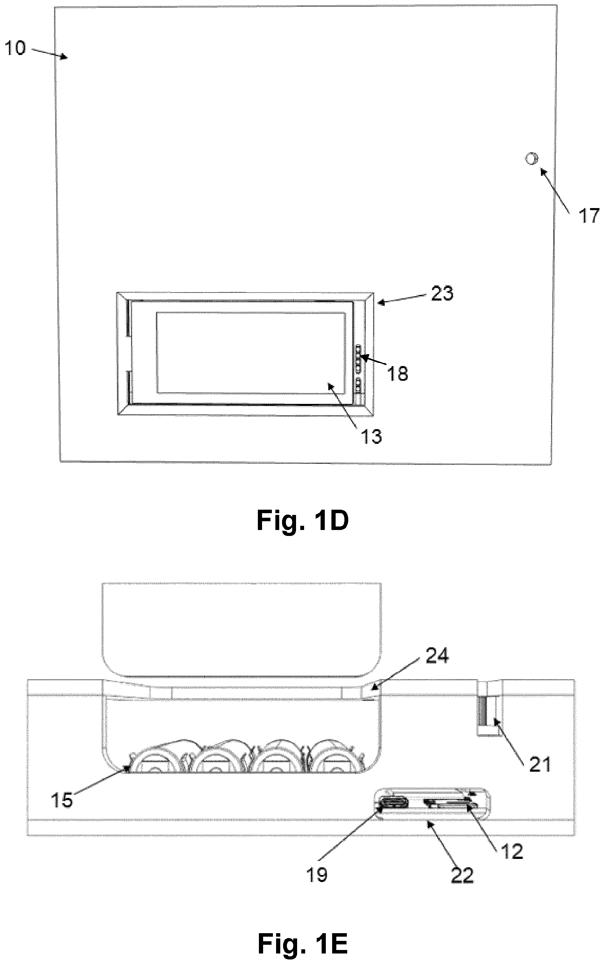

Figs. 1A-1E illustrate a particular exemplary embodiment of the proposed electronic module. According to this exemplary embodiment, the electronic module (1), in order to allow the monitorisation and supply of information (temperature, etc.), in real-time, of the samples stored and/or transported in a container, includes a series of elements/modules, preferably housed in a casing (10).

In an exemplary, non-limiting embodiment, the container is that described in patent application WO2018224496A1. In other exemplary embodiments, the container may comprise different features or simply be a storage container for samples/objects.

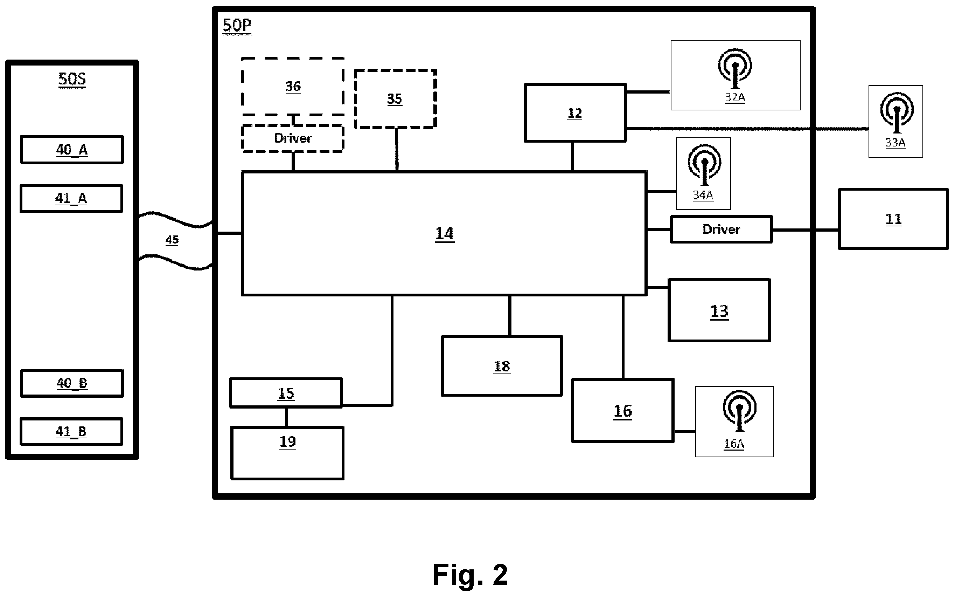

According to the exemplary embodiment described in Figs. 1A-1E, said series of elements/modules are arranged/located on an electronic board (50) and comprise: a first temperature sensor (40_A, see Fig. 2) and a first presence sensor (41_A, see Fig. 2); a second temperature sensor and a second presence sensor (40_B and 41_B, see Fig. 2); a communications module (12); a central processing unit (14, see Fig. 2); a display unit; and a power source (15), in this case formed by four batteries. Likewise, the series of elements/modules also comprises, although not arranged/included in the electronic board itself (50) but connected thereto, for example, by means of a cable, an opening/closing electromechanical device (11) of the container.

When the electronic module (1) is attached to the container, in particular to an inner wall thereof, the temperature and presence sensors (40_A and 41_A) and the temperature and presence sensors (40_B and 41_B) are arranged, respectively, in communication with the inside of the container through an opening (20A) and an opening (20B) co-linear with the opening (20A). Likewise, the opening/closing electromechanical device (11) is arranged in communication with the inside of the container through an opening (21) and the communications module (12) through an opening (22). On the other hand, the display unit is arranged in communication with or interaction from the outside of the container through an opening (23), opposite the opening (20A) and, optionally, the opening (20B).

The power source (15) is, preferably, removable through an opening (24).

Likewise, in this particular exemplary embodiment, the casing (10) also comprises a mechanical system, in this case accessible by means of a hole (17), for the emergency opening of the opening/closing electromechanical device (11).

It must be noted that, although in this example the opening (22) is on a plane different from the plane of the openings (20A and 22B) and the opening (21) comprises two perpendicular sides of the casing (1), in other exemplary embodiments the arrangement of the opening (22) and of the opening (21) in the casing (10) may be modified. For example, the opening (22) may be located on the same plane of the openings (20A and 22B). The only condition is that the openings (20A and 22B) be facing towards the inside of the container when the electronic module (1) is attached to the container.

The display unit comprises a screen (13). In this case, the display unit also includes a radiofrequency identification means reading unit (16), for example, a number of cards implemented with RFID or NFC technology. In particular, the opening/closing electromechanical device (11) is configured to be triggered by means of radiofrequency identification means.

Likewise, the display unit also includes several LEDs (18), preferably of different colours, to indicate if the container is in preparation, in service, if an alert has been broadcast, etc. Preferably, the LEDs (18) are arranged between the screen (13) and the reading unit (16).

The communications module (12) may comprise a SIM, microSIM, nanoSIM, or nuSIM card. In the illustrated example, as seen in the different views, the third opening (22) also houses a USB connector (19).

The batteries may be rechargeable. Alternatively, the batteries may be charged internally using the USB connector (19).

The previously described electronic module (1) includes two presence sensors (41_A, 41_B) and two temperature sensors (40_A, 40_B). Thus, each group (that is, i) first temperature sensor/first presence sensor and ii) second temperature sensor/second presence sensor) may monitor/detect, independently, the temperature/presence of the secondary containers arranged within the container. In any case, in other exemplary embodiments, not illustrated in this case, the electronic module (1) only includes a group of temperature sensors/presence sensors.

Likewise, in some additional non-illustrated exemplary embodiments, the opening (20A) comprises two sub-portions: the first one to house the first temperature sensor (40_A) and the second one to house the first presence sensor (41_A). The same may occur with the opening (20B) in case the electronic module (1) includes two presence sensors and two temperature sensors.

The presence sensor or detector of the secondary container or containers arranged inside the container may be an optical sensor operating in the infrared range. In any case, the invention is not limited to this type of sensor, as other types may also be used; for example, capacitive or inductive sensors.

In reference now to Fig. 2, another possible exemplary embodiment of the proposed electronic module (1) is shown therein. In this case, the electronic board (50) is divided/separated into two portions, resulting in a main board (50P) and a secondary board (50S), in particular, for the temperature sensor/sensors (40_A, 40_B) and the presence sensor/sensors (41_A, 41_B).

The secondary electronic board (50S) is separated from the main one (50P) and linked by a ribbon cable (45) to allow for its placement in the most suitable and desired position relative to the main one (50P), depending on the shape and dimensions of the container; that is, so that the same electronics can be used for several container designs. The sensors (40_A, 40_B, 41_A, 41_B) are powered and communicate with the main electronic board (50P) by means of the same ribbon cable (45).

The reading unit (16) includes an antenna (16A), both being included in the main electronic board (50P). The same occurs with the screen (13), for example, of electronic ink, the LEDs (18), the communications module (12), the central processing unit (14), the USB connector (19), and the power source (15). The electronics of the power source is provided with a controller for the charge and voltage level of the batteries.

The LEDs (18) are controlled by the central processing unit (14) in order to be able to maintain alert indications, etc., without the operation of the central processing unit (14).

To carry out the communication of the monitored data with and from the computing device or remote server, the communications module (12) comprises, in addition to said SIM, a GSM/LTE/NBIoT module, which may likewise include a built-in GPS and its corresponding antenna (32A). The central processing unit (14) controls all data and positioning communications with this GSM/LTE/NBIoT module through a serial port. The SIM is directly controlled by the GSM/LTE/NBIoT module.

The electronic module (1) of this exemplary embodiment also includes a GPS antenna (33A), of the active (amplified) type, external to the main electronic board (50P) and connected thereto, preferably, by means of a cable. If it is not possible to obtain a direct positioning by means of the GPS antenna (33A), for example, indoors, a positioning based on triangulation of the signal received by the GSM telephone towers is obtained.

The opening/closing electromechanical device (11) remains outside the main electronic board (50P) so that it can be placed in the precise needed position according to the shape of the container and/or the lid. The opening/closing electromechanical device (11) is linked to the main electronic board (50P) by means of a cable carrying both the blocking signal and the status (open/closed).

In addition, other (optional) elements exist such as a buzzer (36), with its corresponding drivers, to control the current that they need. Likewise, optionally, the main electronic board (50P) includes, for instance, a 3-axis accelerometer (35), which allows to detect impacts, movement, rollovers, etc., as well as a Bluetooth communications module, including a built-in antenna (34A) in the main electronic board (50P).

Following some of the main functionalities of the proposed container are detailed:

### Control of courier operations

- Control of transported material
   - Type of content
      ∘ Biological samples
      ∘ Vaccines
      ∘ Medications
      ∘ Others: organs, tissues, food, bones, etc.
   - Other Logs
      ∘ Container alarms
         ▪ Temperature
            - Temperature control of vaccines and thermolabile drugs: 2°-8° C
            - Temperature control of blood bags: 18°-20°C
            - Temperature control of biological samples: 13°-25° C.
            - Others with negative cold controls
               ∘ Bones
               ∘ Organs.
         ▪ GPS position.
         ▪ Correct sample preparation (control of compliance with UN 3373 regulations on the use of a secondary container to protect the samples during transport).
         ▪ Breakage or shock (use of an accelerometer).

In another embodiment, the proposed container for biological samples, vaccines, etc, comprises the following features: a first compartment with capacity for a plurality of samples (-400 samples); a second compartment for accumulating a cooling medium, where a valve communicates with an external charging system of said cooling medium, the latter being a gas, and the second compartment encloses the first compartment; and at least two temperature sensors (internal temperature and external temperature) to determine when the valve is to be activated to insert the cooling gas.

The cooling gas should keep the samples inside the container at a temperature below 23°C for a maximum period of 2-4 hours under normal ambient heat conditions (maximum 32°C-35°C). In the case of "pharmacy" products, they should be kept at a temperature between 2 and 8°C. Both temperature needs can be solved by additionally using cold accumulators, which will be specific for each application.

The valve can be activated by an electrical pulse (powered by a system battery or by a button cell) to lower the temperature of the samples in the first compartment when the samples are inserted. Moreover, the cooled gas in the second compartment can keep the first compartment at a temperature between -12°C and 23°C for a transport time between 2 and 4 hours depending on the outside temperature and the quantity of samples transported. Likewise, the temperature can be parameterized depending on the samples transported, for example: temperature < 23°C for blood samples; temperature between 2°C and 8°C for pharmaceutical products; and temperature down to -12°C.

The external charging system can allow the loading of up to 5 container in a period of time between 45 and 60 min and in which the gas is inserted in the second compartment.

The scope of the present invention is defined in the attached claims.

## Claims

1. An electronic module for containers, said module being adapted for its attachment to a container and comprising:
- a first temperature sensor (40_A) and a first presence sensor (41_A) configured, when the electronic module (1) is attached to the container, to respectively detect temperature and content data within the container;
- an electromechanical device for the opening/closing (11) of the container;
- a communications module (12);
- a display unit comprising a screen (13), wherein the display unit is arranged such that, when the electronic module (1) is attached to the container, it is visible from the outside of the container;
- at least one central processing unit (14) operatively connected to the first temperature sensor (40_A), the first presence sensor (41_A), the electromechanical device (11), the communications module (12) and the display unit; and
- a power source (15) for powering, at least, the central processing unit (14).

2. The electronic module according to claim 1, additionally comprising a casing (10) adapted to house the first temperature sensor (40_A), the first presence sensor (41_A), the electromechanical device (11), the communications module (12), the display unit, and the central processing unit (14).

3. The electronic module according to claim 1 or 2, wherein the casing (10) comprises:
- a first opening (20A) for the communication of the first temperature sensor (40_A) and of the first presence sensor (41_A) with the inside of the container;
- a second opening (21) for the opening/closing electromechanical device (11);
- a third opening (22) for the communications module (12);
- a fourth removable opening (24) for the arrangement of the power source (15) within the casing (10); and
- a fifth opening (23), opposite the first opening (20A), for the interaction of the display unit with the outside of the container.

4. The electronic module according to claim 3, wherein the first opening comprises two sub-portions, wherein the first of the sub-portions houses the first temperature sensor (40_A) and the second of the sub-portions houses the first presence sensor (41_A).

5. The electronic module according to claim 3, wherein the casing (10) is also adapted to house a second temperature sensor (40_B) and a second presence sensor (41_B), wherein the casing (10) comprises a sixth opening (20B) for the communication, when the casing is attached to the container, of the second temperature sensor (40_B) and of the second presence sensor (41_B) with the inside of the container.

6. The electronic module according to claim 5, wherein the sixth opening (20B) comprises two sub-portions, wherein the first of the sub-portions houses the second temperature sensor (40_B) and the second of the sub-portions houses the second presence sensor (41_B).

7. The electronic module according to any one of claims 1 to 4, comprising an electronic board (50), wherein the first temperature sensor (40_A), the first presence sensor (41_A), the communications module (12), the screen (13), the central processing unit (14) and the power source (15) are included or built into the electronic board (50).

8. The electronic module according to claim 5 or 6, comprising an electronic board (50), wherein the two temperature sensors (40_A, 40_B), the two presence sensors (41_A, 41_B), the communications module (12), the screen (13), the central processing unit (14), and the power source (15) are included or built into the electronic board (50).

9. The electronic module according to claim 7 or 8, wherein the electronic board (50) is configured to split up in at least two portions, a first sub-portion (50P) and a second sub-portion (50S), wherein the first sub-portion (50P) includes or comprises the communications module (12), the screen (13), the central processing unit (14) and the power source (15), and wherein the second sub-portion (50S) includes or comprises the temperature sensor (40_A), or temperature sensors (40_A, 40_B), and the presence sensor (41_A), or presence sensors (41_A, 41_B).

10. The electronic module according to any one of the previous claims, also comprising a radiofrequency identification means reading unit (16) configured to operate by means of RFID, NFC, or Bluetooth technology.

11. The electronic module according to claim 3, wherein the third opening (22) also houses a USB connector (19).

12. The electronic module according to claim 2, wherein the casing (10) also comprises a hole (17) for the emergency opening of the opening/closing electromechanical device (11).

13. The electronic module according to claim 9, wherein the first sub-portion (50P) also includes or comprises at least one of an accelerometer (35) and a buzzer (36).

14. A container comprising an electronic module according to any one of the claims 1 to 13.

15. The container according to claim 14, wherein the container is a transport container for biological samples, vaccines, and/or medicines.
